# EUROPEAN PATENT APPLICATION

(11) **EP 4 443 780 A1**
(43) Date of publication of application: **09.10.2024**
(21) Application number: 24164261.0
(22) Date of filing: 18.03.2024
(51) Int. Cl.: H04J 11/00, H04W 48/16, H04W 56/00

(54) **WIRELESS COMMUNICATION DEVICE FOR PERFORMING CELL SEARCH BY ACCUMULATING SYNCHRONIZATION SIGNAL AND OPERATING METHOD THEREOF**

(30) Priority: 21.03.2023 KR 20230036893; 19.09.2023 KR 20230125000
(71) Applicant: Samsung Electronics Co., Ltd., Suwon-si, Gyeonggi-do 16677 (KR)
(72) Inventor: SIM, Yujin, 16677 Suwon-si (KR); CHONG, Dahae, 16677 Suwon-si (KR); KO, Gunyoung, 16677 Suwon-si (KR); KIM, Beomkon, 16677 Suwon-si (KR); DO, Joohyun, 16677 Suwon-si (KR); SHIM, Myungjoon, 16677 Suwon-si (KR)
(74) Representative: Marks & Clerk LLP

(57) **Abstract**

Provided is a method of operating a wireless communication device for performing a cell search, the method including generating a first accumulated signal by accumulating a downlink signal by a first reference number of times, the generating of the first accumulated signal being based on an interval of a first synchronization signal included in the downlink signal, calculating a first quality metric based on the first accumulated signal, determining whether the first quality metric exceeds a first threshold value, and updating the first accumulated signal in response to determining the first quality metric does not exceed the first threshold value to obtain an updated first accumulated signal.

## Description

### BACKGROUND

The inventive concepts relate to a wireless communication device for performing a cell search by accumulating a downlink signal.

In wireless communication systems, synchronization signals, such as a primary synchronization signal (PSS) and a secondary synchronization signal (SSS) included in a downlink signal, are used for a cell search or synchronization of a wireless communication device such as a terminal. In mobile communication systems such as Long Term Evolution (LTE) or 5G, wireless communication devices may search for cells formed by base stations by detecting synchronization signals included in downlink signals broadcast from the base stations. In addition, in satellite communication systems such as Non-Terrestrial Networks (NTN), wireless communication devices may search for cells by detecting synchronization signals included in downlink signals broadcast from satellites.

When a wireless communication device detects a synchronization signal and searches for a cell, it is difficult to detect a synchronization signal in an environment in which the influence of noise included in a signal is large, such as a lower Signal to Noise Ratio (SNR) environment. When the detection of the synchronization signal fails, the wireless communication device may not perform wireless communication.

### SUMMARY

The inventive concepts provide a wireless communication device, and a method, capable of performing a cell search by detecting a synchronization signal even in a lower Signal to Noise Ratio (SNR) environment, and an operating method thereof.

According to an aspect of the inventive concepts, there is provided a method of operating a wireless communication device for performing a cell search, the method including generating a first accumulated signal by accumulating a downlink signal by a first reference number of times, the generating of the first accumulated signal being based on an interval of a first synchronization signal included in the downlink signal, calculating a first quality metric based on the first accumulated signal, determining whether the first quality metric exceeds a first threshold value, and updating the first accumulated signal in response to determining the first quality metric does not exceed the first threshold value to obtain an updated first accumulated signal.

According to an aspect of the inventive concepts, there is provided a method of operating a wireless communication device for performing a cell search, the method including generating a first accumulated signal by accumulating a downlink signal by a first reference number of times, the generating of the first accumulated signal being based on an interval of a first synchronization signal included in the downlink signal, calculating a first quality metric based on the first accumulated signal, determining a reference range among a plurality of reference ranges in which the first quality metric is included to obtain a first determined reference range, and performing one of updating the first accumulated signal based on the first determined reference range, or generating a second accumulated signal based on the first determined reference range, the generating of the second accumulated signal being performed by accumulating the downlink signal by a second reference number of times, and the generating of the second accumulated signal being based on an interval of a second synchronization signal included in the downlink signal.

According to an aspect of the inventive concepts, there is provided a wireless communication device for performing a cell search, the wireless communication device including processing circuitry configured to generate a first accumulated signal by accumulating a downlink signal by a first reference number of times, the first accumulated signal being generated based on an interval of a first synchronization signal included in the downlink signal, calculate a first quality metric based on the first accumulated signal, determine whether the first quality metric exceeds a first threshold value, update the first accumulated signal in response to determining the first quality metric does not exceed the first threshold value, generate a second accumulated signal in response to determining the first quality metric exceeds the first threshold value, the second accumulated signal being generated by accumulating the downlink signal by a second reference number of times based on an interval of a second synchronization signal included in the downlink signal, calculate a second quality metric based on the second accumulated signal, determine whether the second quality metric exceeds a third threshold value, update the second accumulated signal in response to determining the second quality metric does not exceed the third threshold value, and perform a decoding for a physical broadcast channel (PBCH) included in the downlink signal in response to determining the second quality metric exceeds the third threshold value.
At least some of the above and other features of the invention are set out in the claims.

### BRIEF DESCRIPTION OF THE DRAWINGS

Embodiments of the inventive concepts will be more clearly understood from the following detailed description taken in conjunction with the accompanying drawings in which:
FIG. 1 is a schematic diagram illustrating a communication system according to embodiments;
FIG. 2 is a block diagram illustrating a wireless communication device according to embodiments;
FIG. 3 is a diagram illustrating an example of a downlink signal received by a wireless communication device according to embodiments;
FIG. 4A is a graph illustrating a criterion by which a wireless communication device determines a reference range including a first quality metric according to embodiments;
FIG. 4B is a graph illustrating a criterion by which a wireless communication device determines a reference range including a second quality metric according to embodiments;
FIG. 5 is a flowchart illustrating an example of an operation method of a wireless communication device according to embodiments;
FIG. 6A is a flowchart illustrating an example of a more detailed method by which a wireless communication device updates a first accumulated signal according to embodiments;
FIG. 6B is a flowchart illustrating an example of a more detailed method by which a wireless communication device updates a second accumulated signal according to embodiments;
FIG. 7 is a flowchart illustrating another example of an operation method of a wireless communication device according to embodiments;
FIG. 8A is a flowchart illustrating another example of a more detailed method by which a wireless communication device updates a first accumulated signal according to embodiments;
FIG. 8B is a flowchart illustrating another example of a more detailed method by which a wireless communication device updates a second accumulated signal according to embodiments;
FIGS. 9A and 9B are flowcharts illustrating another example of an operation method of a wireless communication device according to embodiments; and
FIG. 10 is a block diagram illustrating a wireless communication device according to embodiments.

### DETAILED DESCRIPTION

Hereinafter, embodiments of the inventive concepts will be described in detail with reference to the accompanying drawings.

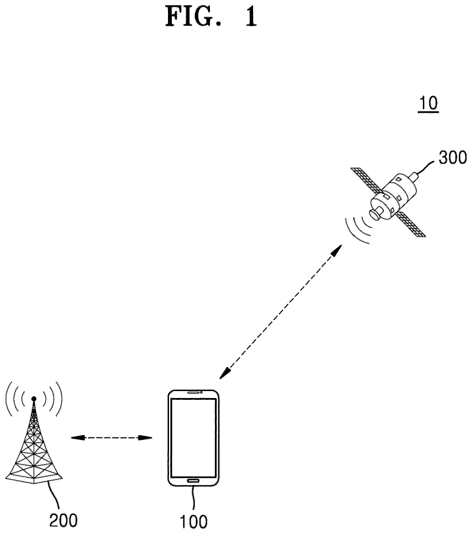

FIG. 1 is a schematic diagram illustrating a communication system according to embodiments.

Referring to FIG. 1, a communication system 10 according to embodiments may include a wireless communication device 100, a base station 200, and/or a satellite 300.

As a non-limiting example, the communication system 10 may include at least one of a New Radio (NR) system, a 5th Generation (5G) system, a Long Term Evolution (LTE) system, a Code Division Multiple Access (CDMA) system, a Global System for Mobile Communications (GSM) system, a Wireless Local Area Network (WLAN) system, a Narrow Band Internet of Things Non-Terrestrial Networks (NB IoT NTN) system, a New Radio Non-Terrestrial Networks (NR NTN) system, or any other wireless communication system.

The wireless communication device 100 is a device capable of performing wireless communication, may be fixed or mobile, and may be any one of various devices capable of transmitting and receiving data and control information by communicating with the base station 200 and/or the satellite 300. The wireless communication device 100 may be referred to as a terminal equipment, a user equipment (UE), a mobile station (MS), a mobile terminal (MT), a user terminal (UT), a subscription station (SS), a wireless device, a handheld device, or the like.

A wireless communication network between the wireless communication device 100 and the base station 200, and a wireless communication network between the wireless communication device 100 and the satellite 300, may each support multiple users to communicate by sharing available network resources. For example, in wireless communication networks, information may be transmitted in a variety of ways, such as CDMA, Frequency Division Multiple Access (FDMA), Time Division Multiple Access (TDMA), Orthogonal Frequency Division Multiple Access (OFDMA), and/or Single Carrier Frequency Division Multiple Access (SC-FDMA).

The base station 200 may generally refer to a fixed station that communicates with the wireless communication device 100 and/or other base stations, and may exchange data and control information with the wireless communication device 100 and/or other base stations by communicating with the wireless communication device 100 and/or other base stations. The base station 200 may also be referred to as a Node B, an evolved-Node B (eNB), a Base Transceiver System (BTS), an Access Point (AP), or the like.

The satellite 300 may be a space or air platform capable of transmitting and receiving data to and from the wireless communication device 100. The satellite 300 may communicate with the wireless communication device 100, where the satellite 300 may transmit and receive data to and from the wireless communication device 100. Whilst, Fig. 1, schematically shows the satellite 300 communicating directly with the wireless communication device 100, the communication may be via the base station 200.

In the communication system 10, when the wireless communication device 100 performs wireless communication with the base station 200 over a path having a number of obstacles and/or interference radio waves, the signal to noise ratio (SNR) of the signal used for communication between the wireless communication device 100 and the base station 200 may be lower. In addition, when the wireless communication device 100 performs wireless communication with the satellite 300 located at a longer distance from the wireless communication device 100, the SNR of the signal used for communication between the wireless communication device 100 and the satellite 300 may be lower. In such a lower SNR environment, cell search for initial connection between the wireless communication device 100, and the base station 200 and/or the satellite 300 may not be performed smoothly. However, embodiments provide a method of performing cell search smoothly.

In embodiments, the wireless communication device 100 can receive a downlink signal from an external device and generate a first accumulated signal by accumulating the downlink signal by a preset (or alternatively, given) first reference number of times based on an interval of a first synchronization signal included in the downlink signal. In addition, the wireless communication device 100 calculates a first quality metric based on the first accumulated signal, determines whether the first quality metric exceeds a first threshold value, and updates the first accumulated signal when the first quality metric does not exceed the first threshold value, and may generate a second accumulated signal by accumulating the downlink signal by a preset (or alternatively, given) second reference number of times based on the interval of a second synchronization signal included in the downlink signal, when the first quality metric exceeds the first threshold value. Then, the wireless communication device 100 may calculate a second quality metric on the basis of the second accumulated signal, determine whether the second quality metric exceeds a third threshold value, update the second accumulated signal when the second quality metric does not exceed the third threshold value, and, when the second quality metric exceeds the third threshold value, perform decoding on a physical broadcast channel (PBCH) included in the downlink signal to complete cell search. In this way, the wireless communication device 100 according to embodiments may smoothly perform cell search by detecting the synchronization signal even in a lower SNR environment by using the accumulated signal generated by accumulating the downlink signal.

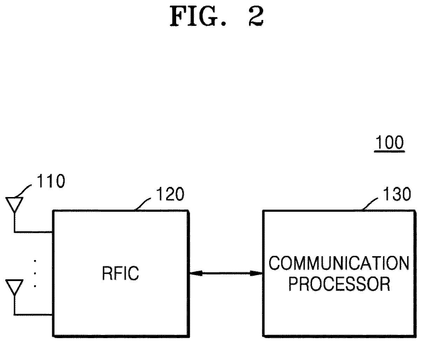

A more detailed structure and operation method of the wireless communication device 100 may be described below with reference to FIG. 2.

FIG. 2 is a block diagram illustrating a wireless communication device according to embodiments.

Referring to FIG. 2, a wireless communication device 100 according to embodiments may include a plurality of antennas 110, a radio frequency integrated circuit (RFIC) 120, and/or a communication processor 130.

The plurality of antennas 110 may transmit a signal processed by the RFIC 120 through a wireless channel. In addition, the plurality of antennas 110 may receive signals transmitted over wireless channels from external devices (e.g., base stations 200 and/or satellites 300). For example, the plurality of antennas 110 may receive a downlink signal including a first synchronization signal and a second synchronization signal from an external device.

The RFIC 120 may process the downlink signal received through the plurality of antennas 110 into a baseband signal. In more detail, the RFIC 120 may amplify lower noise from signals received from the plurality of antennas 110 and perform frequency down conversion into baseband signals.

The communication processor 130 may control the overall communication operation of the wireless communication device 100. The communication processor 130 may be implemented through a processor, a numeric processing unit (NPU), a graphics processing unit (GPU), or the like.

The communication processor 130 may perform a cell search operation during an initial connection with an external device. The cell search operation may be an operation for searching for in which cell the wireless communication device 100 is located among a plurality of cells formed by each of a plurality of external devices. The wireless communication device 100 may perform a cell search operation in situations such as when initially accessing a wireless communication system and determining whether a handover is necessary or appropriate (e.g., in response to determining, by the communication processor 130, that a signal strength of an external device is greater than that of the external device to which the wireless communication device 100 is currently connected).

When performing the cell search operation, the communication processor 130 may generate a first accumulated signal by accumulating the downlink signal by a preset (or alternatively, given) first reference number of times based on the interval of the first synchronization signal. For example, the communication processor 130 may generate a plurality of split signals by splitting the downlink signal to have an interval (e.g., 10 ms) of the first synchronization signal, and generate a first accumulated signal by accumulating the plurality of split signals in time order. In addition, the communication processor 130 may generate a second accumulated signal by accumulating the downlink signal by a preset (or alternatively, given) second reference number of times based on the interval of the second synchronization signal. For example, the communication processor 130 may generate a plurality of split signals by splitting the downlink signal to have an interval (e.g., 20 ms) of the second synchronization signal, and generate a second accumulated signal by accumulating the plurality of split signals in time order.

In embodiments, the first synchronization signal may be a primary synchronization signal (PSS) and the second synchronization signal may be a secondary synchronization signal (SSS), but embodiments are not limited thereto, and the first synchronization signal may be an SSS and the second synchronization signal may be a PSS. However, hereinafter, embodiments in which the first synchronization signal is a PSS and the second synchronization signal is an SSS will be mainly described.

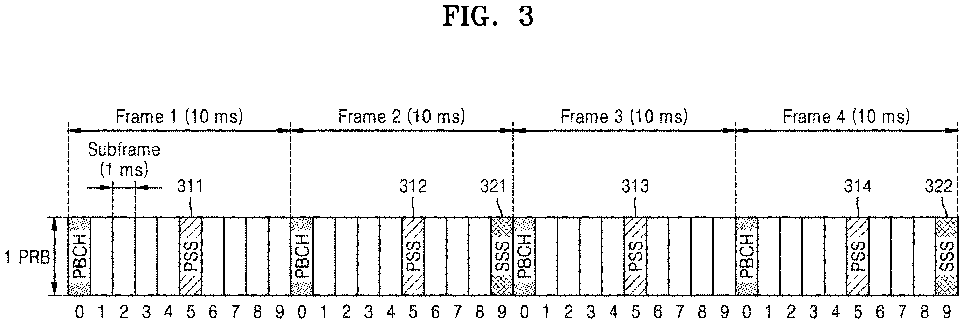

In this case, an example of the downlink signal, and the first synchronization signal and the second synchronization signal included in the downlink signal, may be confirmed with reference to FIG. 3.

FIG. 3 is a diagram illustrating an example of a downlink signal received by a wireless communication device according to embodiments.

Referring to FIG. 3, when the communication system 10 including the wireless communication device 100 is an NB IoT NTN system, a diagram showing an example of a downlink signal received by the wireless communication device 100 may be identified (e.g., depicted).

The downlink signal may include a plurality of frames on a time axis, and one frame may occupy one Physical Resource Block (1 PRB) on a frequency axis. In FIG. 3, due to the limitation of the drawing, first to fourth frames Frame 1 to Frame 4 included in the downlink signal are illustrated, but additional frames may be transmitted in succession thereto.

Each of the plurality of frames Frame 1 to Frame 4 may include a plurality of subframes, and each of the plurality of subframes may sequentially have a subframe index of 0 to 9. In this case, each subframe may occupy 1 ms on the time axis.

The PBCH including cell information may be included in subframes in which the subframe index is 0 in the plurality of frames Frame 1 to Frame 4.

The PSS, which is the first synchronization signal, may be included in subframes 311, 312, 313, and 314 having a subframe index of 5, in the plurality of frames Frame 1 to Frame 4. Accordingly, the PSS, which is the first synchronization signal, may be inserted into the downlink signal at a period of 10 ms. In this case, the interval of the first synchronization signal may indicate a period in which the first synchronization signal is inserted into the downlink signal. In the NB IoT NTN system illustrated in FIG. 3, since the PSS is transmitted at a period of 10 ms, the interval of the first synchronization signal may be 10 ms.

The SSS, which is the second synchronization signal, may be included in subframes 321 and 322 having a subframe index of 9 in even-numbered frames (e.g., a second frame Frame 2, a fourth frame Frame 4, and the like), in the plurality of frames Frame 1 to Frame 4. Accordingly, the SSS, which is the second synchronization signal, may be inserted into the downlink signal at a period of 20 ms. In this case, the interval of the second synchronization signal may indicate a period in which the second synchronization signal is inserted into the downlink signal. In the NB IoT NTN system illustrated in FIG. 3, since the SSS is transmitted at a period of, for example, 20 ms period, the interval of the second synchronization signal may be 20 ms.

Referring back to FIG. 2, in embodiments, the communication processor 130 can generate a first accumulated signal by accumulating the downlink signal by a preset (or alternatively, given) first reference number of times based on the interval of the first synchronization signal. According to embodiments, the communication processor 130 can generate the first accumulated signal by accumulating the first synchronization signal by the preset (or alternatively, given) first reference number of times, the timing of the first synchronization signal within the downlink signal being based on (e.g., being determined based on) the interval of the first synchronization signal. According to embodiments, the communication processor 130 may generate the second accumulated signal by accumulating the second synchronization signal by the preset (or alternatively, given) second reference number of times, the timing of the second synchronization signal within the downlink signal being based on (e.g., being determined based on) the interval of the second synchronization signal.

In embodiments, the communication processor 130 may calculate a first correlation value between the received downlink signal and a first synchronization signal sequence generated inside the communication processor 130. Here, the first synchronization signal sequence is a sequence generated by calculating a signal expected as a first synchronization signal in advance by the communication processor 130. When the first synchronization signal is a PSS, the first synchronization signal sequence may be a PSS sequence. The communication processor 130 may generate a first accumulated signal by accumulating the first correlation value calculated based on the downlink signal and the first synchronization signal sequence by a preset (or alternatively, given) first reference number of times.

In this case, the communication processor 130 may obtain the first correlation value for a range corresponding to the interval (10 ms in the example of FIG. 3) of the first synchronization signal and detect a position at which the first correlation value becomes the maximum (or highest) as the position of the first synchronization signal.

The communication processor 130 may generate a plurality of split signals by splitting the downlink signal received through the plurality of antennas 110 to have an interval (e.g., 10 ms) of the first synchronization signal. In this case, when the communication processor 130 generates the first accumulated signal by accumulating the downlink signal by a first reference number of times, the split signal may be a downlink signal received by the communication processor 130. In addition, when the communication processor 130 generates the first accumulated signal by accumulating the first correlation value, calculated based on the downlink signal and the first synchronization signal sequence, by the first reference number of times, the split signal may be the first correlation value calculated based on the downlink signal received by the communication processor 130.

For example, when a downlink signal is as illustrated in FIG. 3 and a first part of a received downlink signal is a subframe in which a subframe index of the first frame Frame 1 is 2, the communication processor 130 may generate a split signal having a length of 10 ms by splitting the downlink signal from a subframe in which a subframe index of the first frame Frame 1 is 2 to a subframe in which a subframe index of the second frame Frame 2 is 1. The communication processor 130 may accumulate the split signals into the first accumulated signal (the first accumulated signal in the initial state may all have a value of 0) in a chronological order.

Then, the communication processor 130 may generate the split signal by splitting the downlink signal from a subframe in which the subframe index of the second frame Frame 2 is 2 to a subframe in which the subframe index of the third frame Frame 3 is 1. The communication processor 130 may accumulate the split signals into the first accumulated signals in a chronological order.

The communication processor 130 may generate the final first accumulated signal by repeating the accumulation as many times as a first reference number of times.

In this case, the first reference number of times may be set so that the probability of success of cell search without an additional accumulation operation may exceed a reference value (e.g., 50 %) based, for example, on a cell search algorithm used in the wireless communication device 100, cell search performance required by (or configured on) the wireless communication device 100, performance of the plurality of antennas 110 included in the wireless communication device 100, and the like.

Noise such as Additive White Gaussian Noise (AWGN) included in the downlink signal may be offset through such accumulation.

The communication processor 130 may generate a first accumulated signal and then calculate a first quality metric based on the first accumulated signal. In embodiments, the first quality metric may be set to any one of a peak value of a first correlation between the downlink signal and the first synchronization signal sequence, reference signal received power (RSRP) calculated based on the peak value of the first correlation, and/or an SNR calculated based on the peak value of the first correlation. As such, the greater the value of the first quality metric calculated by the communication processor 130, the higher the probability of success of cell search using the received downlink signal. According to embodiments, the term "quality metric" as used herein may refer to a value of a "quality metric," such as the peak value of the first correlation, the RSRP value, the SNR value, etc.

The communication processor 130 may determine whether the first quality metric exceeds the first threshold value. The first threshold value may be a reference value for determining that the cell search result is successful based on the first quality metric. The first threshold value may be set so that the first synchronization signal may be accurately detected based on the cell search performance required by (or configured on) the wireless communication device 100. The first threshold value may be set differently depending on the type of the first quality metric calculated in the previous operation by the communication processor 130.

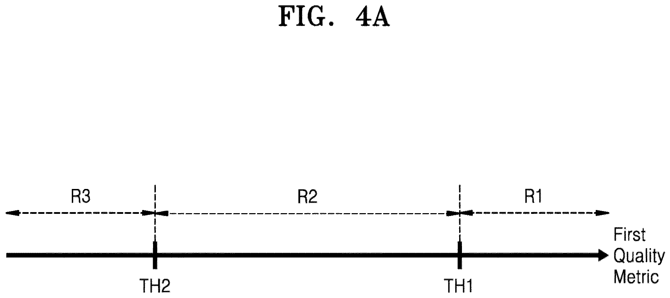

When the first quality metric exceeds the first threshold value, the first quality metric may be included in a first reference range that is a range exceeding the first threshold value. In addition, when the first quality metric does not exceed the first threshold value, the first quality metric may be included in a second reference range or a third reference range that does not exceed the first threshold value. A more detailed description of the first to third reference ranges will be described later with reference to FIG. 4A.

In this case, when the first quality metric exceeds the first threshold value, it may mean that the detection of the first synchronization signal is successfully performed. When the first quality metric exceeds the first threshold value, the communication processor 130 may generate a second accumulated signal by accumulating the downlink signal by a preset (or alternatively, given) second reference number of times based on the interval of the second synchronization signal included in the downlink signal. An operation of generating the second accumulated signal by the communication processor 130 and a subsequent operation will be described later.

Conversely, when the first quality metric does not exceed the first threshold, it may mean that the current first quality metric does not exist within the range where cell search may be successfully performed. Accordingly, when the first quality metric does not exceed the first threshold value, the communication processor 130 may update the first accumulated signal.

The communication processor 130 may determine whether the first quality metric exceeds a second threshold value that is less than the first threshold value and update the first accumulated signal based on a result of the determination.

The communication processor 130 may determine whether the first quality metric exceeds the second threshold value. The second threshold value may be a reference value for determining whether the first quality metric is a reliable value. The second threshold value may be set to a value less than the first threshold value based on cell search performance required by (or configured on) the wireless communication device 100. The second threshold value may be set differently depending on the type of the first quality metric calculated in the previous operation by the communication processor 130.

The first threshold value, the second threshold value, and the reference range set thereby may be described in more detail with reference to FIG. 4A.

FIG. 4A is a graph illustrating a criterion by which a wireless communication device determines a reference range including a first quality metric according to embodiments.

Referring to FIG. 4A, a graph indicating the reference range set by the first quality metric, the first threshold value, and the second threshold value calculated by the wireless communication device 100 may be confirmed.

The x-axis on the graph may represent the magnitude of the first quality metric and may represent a greater value toward the right side of FIG. 4A. In addition, as indicated on the graph, the first threshold value may have a value greater than the second threshold value.

First, a range exceeding the first threshold value may be referred to as a first reference range R1. In this case, when the first quality metric is included in the first reference range R1, the first quality metric may be meant to be present in a range in which the cell search may be successfully performed.

Next, a range that does not exceed the first threshold value but exceeds the second threshold value may be referred to as a second reference range R2. In this case, when the first quality metric is included in the second reference range R2, it may mean that the first quality metric has a reliable value to a degree but is not present in a range in which the cell search may be successfully performed.

Finally, a range that does not exceed the second threshold value may be referred to as a third reference range R3. In this case, when the first quality metric is included in the third reference range R3, it may mean that the first quality metric has an unreliable value.

Returning back to FIG. 2, the communication processor 130 may update the first accumulated signal based on whether the first quality metric exceeds the second threshold value.

In this case, when the first quality metric exceeds the second threshold value, the first quality metric is included in the second reference range, and it may mean that the first quality metric has a reliable value to a degree but is not present in a range in which the cell search may be successfully performed. When the first quality metric exceeds the second threshold value, the communication processor 130 may set a third reference number of times based on a preset (or alternatively, given) first additional accumulation reference table. The first additional accumulation reference table is a table indicating how many additional accumulation operations should be performed on the first accumulated signal to allow the first quality metric to exceed the first threshold value, and may be preset (or alternatively, given) based on (e.g., by) experiments. For example, the communication processor 130 may set, as a third reference number of times, an additional accumulated number of times corresponding to the difference value between the first quality metric and the first threshold value based on the first additional accumulation reference table.

Then, the communication processor 130 may update the first accumulated signal by additionally accumulating the downlink signal by a third reference number of times based on the interval of the first synchronization signal.

Conversely, when the first quality metric does not exceed the second threshold value, the first quality metric is included in the third reference range, which may mean that the first quality metric has an unreliable value. Accordingly, when the first quality metric does not exceed the second threshold value, the communication processor 130 may update the first accumulated signal by additionally accumulating the downlink signal by the first reference number of times based on the interval of the first synchronization signal. It will be understood that the first reference number of times may be greater than the third reference number of times.

After updating the first accumulated signal in this way, the communication processor 130 may calculate the first quality metric based on the updated first accumulated signal. In addition, the communication processor 130 may determine whether the first quality metric exceeds the first threshold value. In this case, the subsequent operation according to the determination result may be the same as (or similar to) the operation performed after determining whether the first quality metric exceeds the first threshold value.

Previously, after the first quality metric is determined to exceed the first threshold value, the communication processor 130 may generate the second accumulated signal by accumulating the downlink signal by a preset (or alternatively, given) second reference number of times based on the interval of the second synchronization signal.

In embodiments, the communication processor 130 may calculate a second correlation value between the received downlink signal and a second synchronization signal sequence generated inside the communication processor 130. Here, the second synchronization signal sequence is a sequence generated by calculating a signal expected as a second synchronization signal in advance by the communication processor 130. When the second synchronization signal is an SSS, the second synchronization signal sequence may be an SSS sequence. The communication processor 130 may generate a second accumulated signal by accumulating the second correlation value calculated based on the downlink signal and the second synchronization signal sequence by a preset (or alternatively, given) second reference number of times. The communication processor 130 may generate the second accumulated signal by accumulating frames later than frames used to generate the first accumulated signal.

In addition, the communication processor 130 may detect the second synchronization signal based on the position of the first synchronization signal. The communication processor 130 may detect a potential position of the second synchronization signal from the position of the first synchronization signal detected based on the first accumulated signal. For example, in the example of FIG. 3, the time interval from the reception of the first synchronization signal to the reception of the second synchronization signal may be 4 ms or 14 ms. In this case, the communication processor 130 may obtain a second correlation value for a range corresponding to the interval (20 ms in the example of FIG. 3) of the second synchronization signal, detect a position at which the second correlation value becomes the maximum (or highest) as the position of the second synchronization signal, and search for a cell identifier (ID) corresponding to the position of the second synchronization signal.

The communication processor 130 may generate a plurality of split signals by splitting the downlink signal received through the plurality of antennas 110 to have an interval (e.g., 20 ms) of the second synchronization signal. In this case, when the communication processor 130 generates the second accumulated signal by accumulating the downlink signal by a second reference number of times, the split signal may be a downlink signal received by the communication processor 130. In addition, when the communication processor 130 generates the second accumulated signal by accumulating the second correlation value calculated based on the downlink signal and the first synchronization signal sequence by the second reference number of times, the split signal may be the second correlation value calculated based on the downlink signal received by the communication processor 130.

For example, when a downlink signal is as illustrated in FIG. 3 and a first part of a received downlink signal is a subframe in which a subframe index of the first frame Frame 1 is 2, the communication processor 130 may generate a split signal having a length of 20 ms by splitting the downlink signal from a subframe in which a subframe index of the first frame Frame 1 is 2 to a subframe in which a subframe index of the third frame Frame 3 is 1. The communication processor 130 may accumulate the split signals into the second accumulated signal (the second accumulated signal in the initial state may all have a value of 0) in a chronological order.

Then, the communication processor 130 may generate the split signal by splitting the downlink signal from a subframe in which the subframe index of the third frame Frame 3 is 2 to a subframe in which the subframe index of the fifth frame (not shown) is 1. The communication processor 130 may accumulate the split signals into the second accumulated signals in a chronological order.

The communication processor 130 may generate the final second accumulated signal by repeating the accumulation as many times as a second reference number of times.

In this case, the second reference number of times may be set so that the probability of success of cell search without an additional accumulation operation may exceed a reference value (e.g., 50 %) based on at least one of a cell search algorithm used in the wireless communication device 100, cell search performance required (or configured on) by the wireless communication device 100, performance of the plurality of antennas 110 included in the wireless communication device 100, and the like.

Noise such as AWGN included in the downlink signal may be offset through such accumulation.

The communication processor 130 may generate a second accumulated signal and then calculate a second quality metric based on the second accumulated signal. In embodiments, the second quality metric may be set to any one of a peak value of a second correlation between the downlink signal and the second synchronization signal sequence, an RSRP calculated based on the peak value of the second correlation, and/or an SNR calculated based on the peak value of the second correlation. As such, the greater the value of the second quality metric calculated by the communication processor 130, the higher the probability of success of cell search using the received downlink signal.

The communication processor 130 may determine whether the second quality metric exceeds the third threshold value. The third threshold value may be a reference value for determining that the cell search result is successful based on the second quality metric. The second threshold value may be set so that the second synchronization signal may be accurately detected based on the cell search performance required by (or configured on) the wireless communication device 100. The second threshold value may be set differently depending on the type of the second quality metric calculated in the previous operation by the communication processor 130.

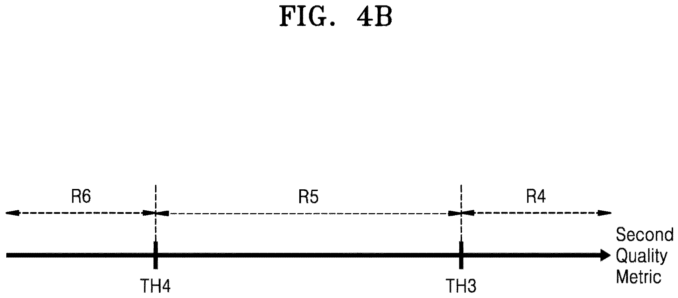

When the second quality metric exceeds the third threshold value, the second quality metric may be included in a fourth reference range that is a range exceeding the third threshold value. In addition, when the second quality metric does not exceed the third threshold value, the second quality metric may be included in a fifth reference range or a sixth reference range that does not exceed the third threshold value. A more detailed description of the fourth to sixth reference ranges will be described later with reference to FIG. 4B.

In this case, when the second quality metric exceeds the third threshold value, it may mean that the detection of the second synchronization signal is successfully performed. When the second quality metric exceeds a third threshold value, the communication processor 130 may perform decoding on a PBCH included in the downlink signal. That is, when the second quality metric exceeds the third threshold value, the communication processor 130 may determine that the cell search has been accurately performed through the received downlink signal and perform decoding on the PBCH for cell search. According to embodiments, the communication processor 130 may decode the PBCH included in the downlink signal in response to determining that the second synchronization signal has been successfully detected, and may establish an initial connection (e.g., radio resource connection (RRC)) with the external device based on the decoded PBCH or may perform a handover to the external device based on the decoded PBCH. According to embodiments, the communication processor 130 may decode the PBCH based on a cell identifier corresponding to a position of the second synchronization signal.

Conversely, when the second quality metric does not exceed the third threshold value, it may mean that the current second quality metric does not exist within the range where cell search may be successfully performed. Accordingly, when the second quality metric does not exceed the third threshold value, the communication processor 130 may update the second accumulated signal.

The communication processor 130 may determine whether the second quality metric exceeds a fourth threshold value that is less than the third threshold value and update the second accumulated signal based on a result of the determination.

The communication processor 130 may determine whether the second quality metric exceeds the fourth threshold value. The fourth threshold value may be a reference value for determining whether the second quality metric is a reliable value. The fourth threshold value may be set to a value less than the third threshold value based on cell search performance required by (or configured on) the wireless communication device 100. The fourth threshold value may be set differently depending on the type of the second quality metric calculated in the previous operation by the communication processor 130.

The third threshold value, the fourth threshold value, and the reference range set thereby may be described in more detail with reference to FIG. 4B.

FIG. 4B is a graph illustrating a criterion by which a wireless communication device determines a reference range including a second quality metric according to embodiments.

Referring to FIG. 4B, a graph indicating the reference range set by the second quality metric, the third threshold value, and the fourth threshold value calculated by the wireless communication device 100 may be confirmed.

The x-axis on the graph may represent the magnitude of the second quality metric and may represent a greater value toward the right side of FIG. 4B. In addition, as indicated on the graph, the third threshold value may have a value greater than the fourth threshold value.

First, a range exceeding the third threshold value may be referred to as a fourth reference range R4. In this case, when the second quality metric is included in the fourth reference range R4, it may mean that the second quality metric is present in a range in which the cell search may be successfully performed.

Next, a range that does not exceed the third threshold value but exceeds the fourth threshold value may be referred to as a fifth reference range R5. In this case, when the second quality metric is included in the fifth reference range R5, it may mean that the second quality metric has a reliable value to a degree but is not present in a range in which the cell search may be successfully performed.

Finally, a range that does not exceed the fourth threshold value may be referred to as a sixth reference range R6. In this case, when the second quality metric is included in the sixth reference range R6, it may mean that the second quality metric has an unreliable value.

Returning back to FIG. 2, the communication processor 130 may update the first accumulated signal based on whether the second quality metric exceeds the fourth threshold value.

In this case, when the second quality metric exceeds the fourth threshold value, the second quality metric is included in the fifth reference range, and it may mean that the second quality metric has a reliable value to a degree but is not present in a range in which the cell search may be successfully performed. When the second quality metric exceeds the fourth threshold value, the communication processor 130 may set a fourth reference number of times based on a preset (or alternatively, given) second additional accumulation reference table. The second additional accumulation reference table is a table indicating how much additional accumulation operations should be performed on the second accumulated signal to allow the second quality metric to exceed the third threshold value, and may be preset (or alternatively, given) based on (e.g., by) experiments. For example, the communication processor 130 may set, as a fourth reference number of times, an additional accumulated number of times corresponding to the difference value between the second quality metric and the third threshold value based on the second additional accumulation reference table.

Then, the communication processor 130 may update the second accumulated signal by additionally accumulating the downlink signal by a fourth reference number of times based on the interval of the second synchronization signal.

Conversely, when the second quality metric does not exceed the fourth threshold value, the second quality metric is included in the sixth reference range, which may mean that the second quality metric has an unreliable value. Accordingly, when the second quality metric does not exceed the fourth threshold value, the communication processor 130 may update the second accumulated signal by additionally accumulating the downlink signal by the second reference number of times based on the interval of the second synchronization signal.

After updating the second accumulated signal in this way, the communication processor 130 may calculate the second quality metric based on the updated second accumulated signal. In addition, the communication processor 130 may determine whether the second quality metric exceeds the third threshold value. In this case, the subsequent operation according to the determination result may be the same as (or similar to) the operation performed after determining whether the second quality metric exceeds the third threshold value.

In this way, the wireless communication device 100 according to embodiments may smoothly perform cell search by detecting the synchronization signal even in a lower SNR environment by using the accumulated signal generated by accumulating the downlink signal.

In embodiments, the communication processor 130 may perform a cell search operation by additionally using the accumulated count value. The accumulated count value may be a value obtained by counting the number of times the downlink signal is accumulated to generate the first accumulated signal or the second accumulated signal.

In order to use the accumulated count value, the communication processor 130 may generate the first accumulated signal by accumulating the downlink signal by the first reference number of times, and then increase the accumulated count value by the first reference number of times from the initial value (e.g., 0). In addition, the communication processor 130 may update the first accumulated signal on the basis of the second threshold value and the accumulated count value when updating the first accumulated signal since the first quality metric does not exceed the first threshold value.

When the first quality metric does not exceed the first threshold value, the communication processor 130 may compare the accumulated count value with the accumulated maximum (or highest) value. In this case, the accumulated maximum (or highest) value may be a value set to satisfy a cell search time limit condition. The accumulated maximum (or highest) value may be preset (or alternatively, given) based on the cell search performance required by (or configured on) the wireless communication device 100, the maximum (or highest) time (e.g., duration of time) that may be required (or utilized) for the cell search, and the like.

When the accumulated count value exceeds the accumulated maximum (or highest) value, the communication processor 130 may reset the frequency band of the downlink signal received from an external device. In addition, the communication processor 130 may initialize the first accumulated signal, generate a first accumulated signal on the basis of a downlink signal received in another frequency band, and calculate a first quality metric on the basis of the generated first accumulated signal.

Conversely, when the accumulated count value does not exceed the accumulation maximum (or highest) value, the communication processor 130 may update the first accumulated signal based on whether the first quality metric exceeds the second threshold value. In addition, the communication processor 130 may update the first accumulated signal and then increase the accumulated count value by the first reference number of times or the third reference number of times. Here, when the first quality metric does not exceed the second threshold value, the communication processor 130 may increase the accumulated count value by the first reference number of times, and when the first quality metric exceeds the second threshold value, increase the accumulated count value by the third reference number of times.

In addition, when the first quality metric exceeds the first threshold value, the communication processor 130 may initialize the accumulated count value to the initial value (e.g., 0) before generating the second accumulated signal. Then, the communication processor 130 may generate a second accumulated signal by accumulating the downlink signal by the second reference number of times, and then increase the accumulated count value from the initial value (e.g., 0) by a second reference number of times. In addition, the communication processor 130 may update the second accumulated signal on the basis of the fourth threshold value and the accumulated count value when updating the second accumulated signal since the second quality metric does not exceed the third threshold value.

When the second quality metric does not exceed the third threshold value, the communication processor 130 may compare the accumulated count value with the accumulated maximum (or highest) value.

When the accumulated count value exceeds the accumulated maximum (or highest) value, the communication processor 130 may reset the frequency band of the downlink signal received from an external device. In addition, the communication processor 130 may initialize the first and second accumulated signals, generate a first accumulated signal based on downlink signals received in different frequency bands, and restart from the stage of calculating the first quality metric based on the generated first accumulated signal.

Conversely, when the accumulated count value does not exceed the accumulation maximum (or highest) value, the communication processor 130 may update the second accumulated signal based on whether the second quality metric exceeds the fourth threshold value. In addition, the communication processor 130 may update the second accumulated signal and then increase the accumulated count value by the second reference number of times or the fourth reference number of times. Here, when the second quality metric does not exceed the fourth threshold value, the communication processor 130 may increase the accumulated count value by the second reference number of times, and when the second quality metric exceeds the fourth threshold value, increase the accumulated count value by the fourth reference number of times.

In this way, the wireless communication device 100 according to embodiments may avoid taking a longer time (or reduce a duration of time used) to search for cells by using the accumulated count value.

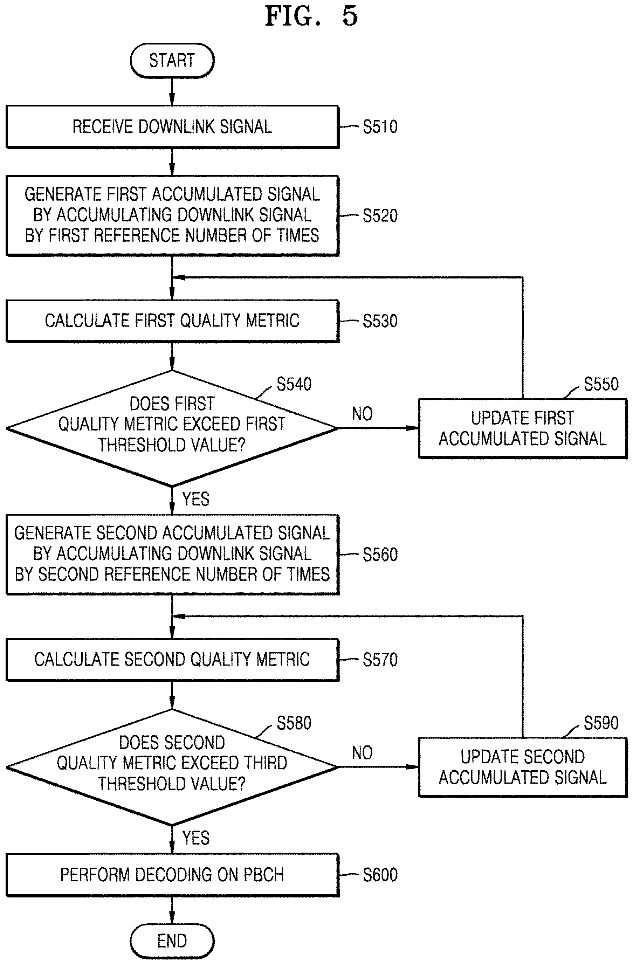

FIG. 5 is a flowchart illustrating an example of an operation method of a wireless communication device according to embodiments.

Referring to FIG. 5, in operation S510, the wireless communication device 100 may receive a downlink signal. The wireless communication device 100 may receive a downlink signal including a first synchronization signal and a second synchronization signal from an external device through the plurality of antennas 110.

In operation S520, the wireless communication device 100 may generate a first accumulated signal by accumulating the downlink signal by a first reference number of times. The wireless communication device 100 may generate the first accumulated signal by accumulating the downlink signal by the first reference number of times based on the interval of the first synchronization signal through the communication processor 130.

In operation S530, the wireless communication device 100 may calculate the first quality metric. The wireless communication device 100 may calculate the first quality metric based on the first accumulated signal through the communication processor 130.

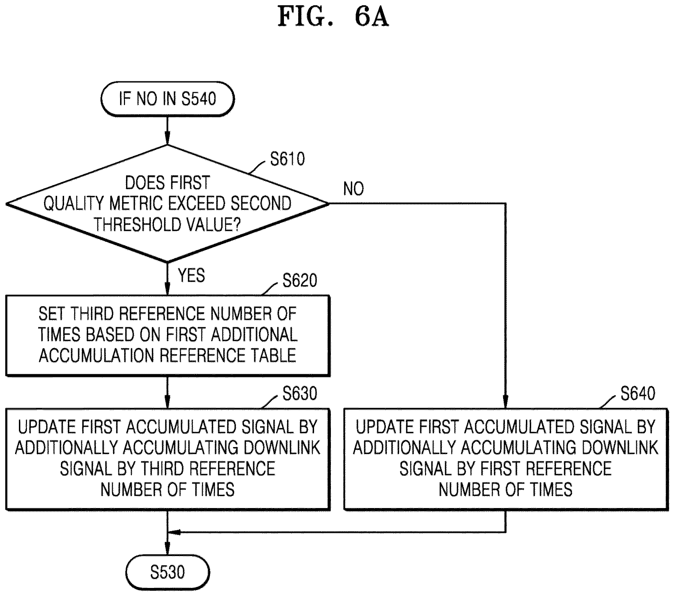

In operation S540, the wireless communication device 100 may determine whether a first quality metric exceeds a first threshold value. When it is determined that the first quality metric does not exceed the first threshold value, the wireless communication device 100 may proceed to operation S550 to thereby update the first accumulated signal. A more detailed method of operation S550 will be described later with reference to FIG. 6A.

Conversely, when it is determined that the first quality metric exceeds the first threshold value, the wireless communication device 100 may proceed to operation S560, to thereby generate a second accumulated signal by accumulating the downlink signal by a second reference number of times. The wireless communication device 100 may generate the second accumulated signal by accumulating the downlink signal by the second reference number of times based on the interval of the second synchronization signal through the communication processor 130.

In operation S570, the wireless communication device 100 may calculate the second quality metric. The wireless communication device 100 may calculate the second quality metric based on the second accumulated signal through the communication processor 130.

In operation S580, the wireless communication device 100 may determine whether the second quality metric exceeds the third threshold value.

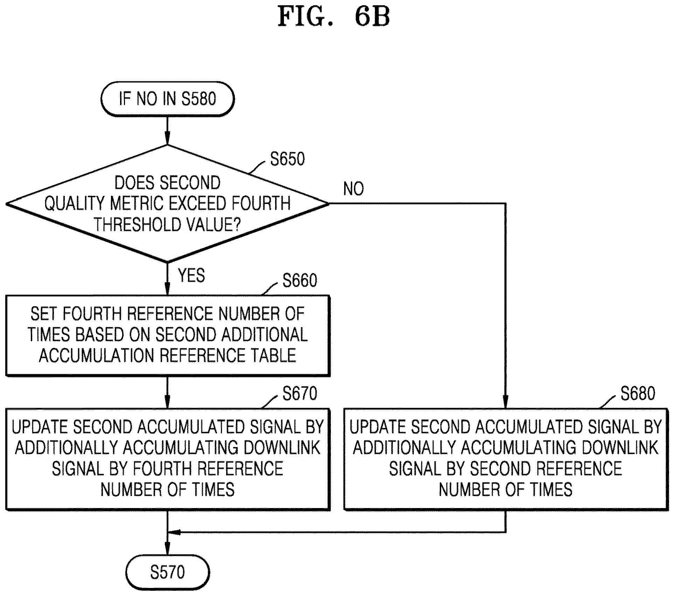

When it is determined that the second quality metric does not exceed the third threshold value, the wireless communication device 100 may proceed to operation S590, to thereby update the second accumulated signal. A more detailed method of operation S590 will be described later with reference to FIG. 6B.

Conversely, when it is determined that the second quality metric exceeds the third threshold value, the wireless communication device 100 may proceed to operation S600 to thereby perform decoding on the PBCH. That is, when the first quality metric exceeds the first threshold value and the second quality metric exceeds the third threshold value, it is determined that the cell search has been accurately performed through the received downlink signal, and thus the wireless communication device 100 may perform decoding on the PBCH after completing the cell search through the communication processor 130.

FIG. 6A is a flowchart illustrating an example of a more detailed method by which a wireless communication device updates a first accumulated signal according to embodiments.

Referring to FIG. 6A, in operation S610, the wireless communication device 100 may determine whether the first quality metric exceeds the second threshold value. The wireless communication device 100 may determine whether the first quality metric has a reliable value by determining whether the first quality metric exceeds the second threshold value through the communication processor 130.

When it is determined that the first quality metric exceeds the second threshold value, the wireless communication device 100 may proceed to operation S620, to thereby set the third reference number of times based on the first additional accumulation reference table.

In addition, in operation S630, the wireless communication device 100 may update the first accumulated signal by additionally accumulating the downlink signal by a third reference number of times. The wireless communication device 100 may update the first accumulated signal by additionally accumulating the downlink signal by a third reference number of times based on the interval of the first synchronization signal through the communication processor 130.

Conversely, when it is determined that the first quality metric does not exceed the second threshold value, the wireless communication device 100 may proceed to operation S640, to thereby update the first accumulated signal by additionally accumulating the downlink signal by the first reference number of times. The wireless communication device 100 may update the first accumulated signal by additionally accumulating the downlink signal by the first reference number of times based on the interval of the first synchronization signal through the communication processor 130.

When the first accumulated signal is updated through the operations shown in FIG. 6A, the wireless communication device 100 may proceed to operation S530 of FIG. 5 to re-calculate the first quality metric, and then may re-determine whether the first quality metric exceeds the first threshold value in operation S540.

FIG. 6B is a flowchart illustrating an example of a more detailed method by which a wireless communication device updates a second accumulated signal according to embodiments.

Referring to FIG. 6B, in operation S650, the wireless communication device 100 may determine whether the second quality metric exceeds a fourth threshold value. The wireless communication device 100 may determine whether the second quality metric has a reliable value by determining whether the second quality metric exceeds the fourth threshold value through the communication processor 130.

When it is determined that the second quality metric exceeds the fourth threshold value, the wireless communication device 100 may proceed to operation S660, to thereby set the fourth reference number of times based on the second additional accumulation reference table.

In addition, in operation S670, the wireless communication device 100 may update the second accumulated signal by additionally accumulating the downlink signal by the fourth reference number of times. The wireless communication device 100 may update the second accumulated signal by additionally accumulating the downlink signal by the fourth reference number of times based on the interval of the second synchronization signal through the communication processor 130.

Conversely, when it is determined that the second quality metric does not exceed the fourth threshold value, the wireless communication device 100 may proceed to operation S680, to thereby update the second accumulated signal by additionally accumulating the downlink signal by the second reference number of times. The wireless communication device 100 may update the second accumulated signal by additionally accumulating the downlink signal by the second reference number of times based on the interval of the second synchronization signal through the communication processor 130.

When the second accumulated signal is updated through the operations shown in FIG. 6B, the wireless communication device 100 may proceed to operation S570 of FIG. 5 to re-calculate the second quality metric, and then may re-determine whether the second quality metric exceeds the third threshold value in operation S580.

When using the operation method of the wireless communication device 100 according to embodiments, a cell search may be performed by using the accumulated signal generated by accumulating the downlink signal, thereby smoothly performing a cell search by detecting a synchronization signal even in a lower SNR environment. In addition, by comparing the quality metric calculated based on the accumulated signal with the threshold value to determine the update of the accumulated signal, cell search may be performed efficiently in a lower SNR environment.

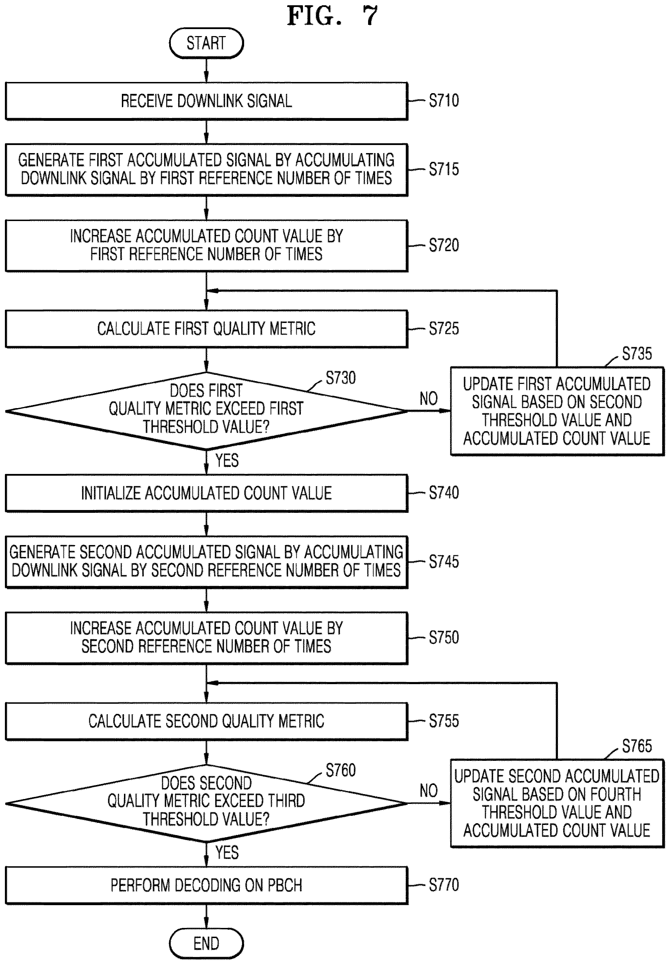

FIG. 7 is a flowchart illustrating another example of an operation method of a wireless communication device according to embodiments.

Referring to FIG. 7, a method of operating the wireless communication device 100 using an accumulated count value may be identified.

In operation S710, the wireless communication device 100 may receive a downlink signal. The operation S710 may be performed in the same manner as, or a similar manner to, operation S510 of FIG. 5.

In operation S715, the wireless communication device 100 may generate a first accumulated signal by accumulating the downlink signal by a first reference number of times. The operation S715 may be performed in the same manner as, or a similar manner to, operation S520 of FIG. 5.

In operation S720, the wireless communication device 100 may increase the accumulated count value by the first reference number of times. The wireless communication device 100 may increase the accumulated count value by the first reference number of times, which is the number of times obtained by accumulating the downlink signals in operation S715 through the communication processor 130.

In operation S725, the wireless communication device 100 may calculate the first quality metric. The operation S725 may be performed in the same manner as, or a similar manner to, operation S530 of FIG. 5.

In operation S730, the wireless communication device 100 may determine whether a first quality metric exceeds a first threshold value. The operation S730 may be performed in the same manner as, or a similar manner to, operation S540 of FIG. 5.

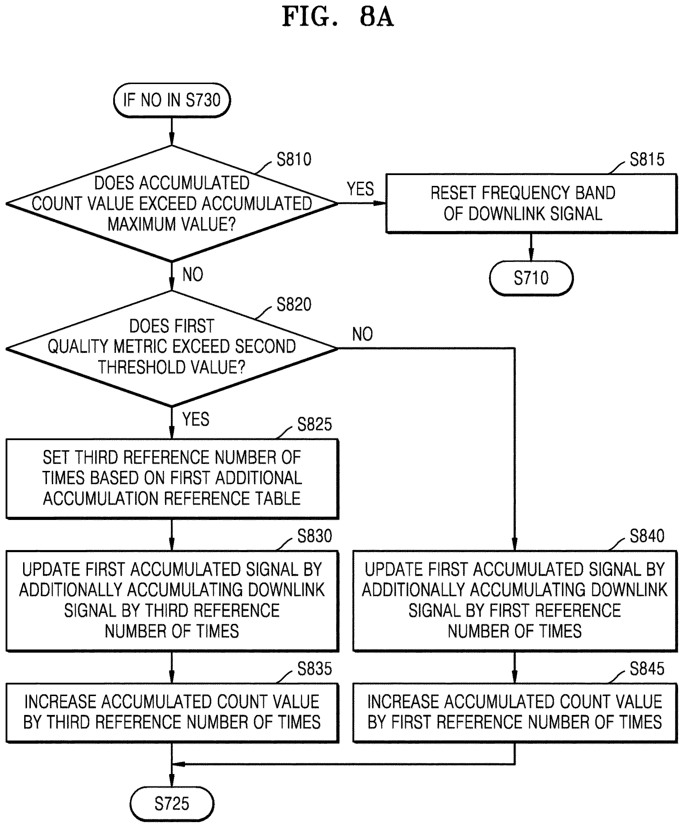

When it is determined that the first quality metric does not exceed the first threshold value, the wireless communication device 100 may proceed to operation S735 to thereby update the first accumulated signal based on the second threshold value and the accumulated count value. A more detailed method of operation S735 will be described later with reference to FIG. 8A.

Conversely, when it is determined that the first quality metric exceeds the first threshold value, the wireless communication device 100 may proceed to operation S740 to thereby initialize the accumulated count value. The wireless communication device 100 may initialize the accumulated count value to an initial value (e.g., 0) through the communication processor 130. According to embodiments, a similar initialization may also be performed before operation S720.

In operation S745, the wireless communication device 100 may generate the second accumulated signal by accumulating the downlink signal by the second reference number of times. The operation S745 may be performed in the same manner as, or a similar manner to, operation S560 of FIG. 5.

In operation S750, the wireless communication device 100 may increase the accumulated count value by the second reference number of times. The wireless communication device 100 may increase the accumulated count value by the second reference number of times, which is the number of times obtained by accumulating the downlink signals in operation S745 through the communication processor 130.

In operation S755, the wireless communication device 100 may calculate the second quality metric. The operation S755 may be performed in the same manner as, or a similar manner to, operation S570 of FIG. 5.

In operation S760, the wireless communication device 100 may determine whether the second quality metric exceeds the third threshold value. The operation S760 may be performed in the same manner as, or a similar manner to, operation S580 of FIG. 5.

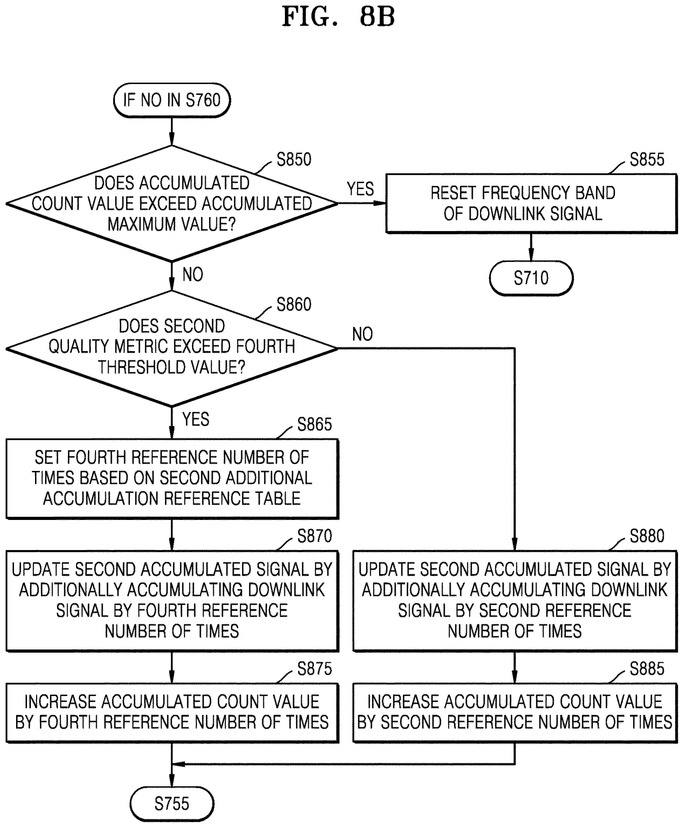

When it is determined that the second quality metric does not exceed the third threshold value, the wireless communication device 100 may proceed to operation S765 to thereby update the second accumulated signal based on the fourth threshold value and the accumulated count value. A more detailed method of operation S765 will be described later with reference to FIG. 8B.

Conversely, when it is determined that the second quality metric exceeds the third threshold value, the wireless communication device 100 may proceed to operation S770 to thereby perform decoding on the PBCH. The operation S770 may be performed in the same manner as, or a similar manner to, operation S600 of FIG. 5.

FIG. 8A is a flowchart illustrating another example of a more detailed method by which a wireless communication device updates a first accumulated signal according to embodiments.

Referring to FIG. 8A, in operation S810, the wireless communication device 100 may determine whether the accumulated count value exceeds the accumulated maximum (or highest) value. The wireless communication device 100 may determine whether to additionally accumulate the downlink signal received in the current frequency band by determining whether the accumulated count value exceeds the accumulated maximum (or highest) value.

When it is determined that the accumulated count value exceeds the accumulated maximum (or highest) value, the wireless communication device 100 may proceed to operation S815 to thereby reset the frequency band of the downlink signal. Then, the wireless communication device 100 proceeds to operation S710, and re-perform the reception of the downlink signal.

When it is determined that the accumulated count value does not exceed the accumulated maximum (or highest) value, the wireless communication device 100 may by proceed to operation S820 to thereby determine whether the first quality metric exceeds the second threshold value . The operation S820 may be performed in the same manner as, or a similar manner to, operation S610 of FIG. 6A.

When it is determined that the first quality metric exceeds the second threshold value, the wireless communication device 100 may proceed to operation S825, to thereby set the third reference number of times based on the first additional accumulation reference table. In addition, in operation S830, the wireless communication device 100 may update the first accumulated signal by additionally accumulating the downlink signal by a third reference number of times. The operations S825 and S830 may be performed in the same manner as, or a similar manner to, operations S620 and S630 of FIG. 6A, respectively.

In addition, in operation S835, the wireless communication device 100 may increase the accumulated count value by the third reference number of times. The wireless communication device 100 may increase the accumulated count value by the third reference number of times, which is the number of times obtained by accumulating the downlink signals in operation S830 through the communication processor 130.

Conversely, when it is determined that the first quality metric does not exceed the second threshold value, the wireless communication device 100 may proceed to operation S840, to thereby update the first accumulated signal by additionally accumulating the downlink signal by the first reference number of times. The operation S840 may be performed in the same manner as, or a similar manner to, operation S640 of FIG. 6A.

In addition, in operation S845, the wireless communication device 100 may increase the accumulated count value by the first reference number of times. The wireless communication device 100 may increase the accumulated count value by the first reference number of times, which is the number of times obtained by accumulating the downlink signals in operation S840 through the communication processor 130.

When the first accumulated signal is updated and accumulated count value is increased through the operations shown in FIG. 8A, the wireless communication device 100 may proceed to operation S725 of FIG. 7 to re-calculate the first quality metric, and then may re-determine whether the first quality metric exceeds the first threshold value in operation S730.

FIG. 8B is a flowchart illustrating another example of a more detailed method by which a wireless communication device updates a second accumulated signal according to embodiments.

Referring to FIG. 8B, in operation S850, the wireless communication device 100 may determine whether the accumulated count value exceeds the accumulated maximum (or highest) value. The wireless communication device 100 may determine whether to additionally accumulate the downlink signal received in the current frequency band by determining whether the accumulated count value exceeds the accumulated maximum (or highest) value.

When it is determined that the accumulated count value exceeds the accumulated maximum (or highest) value, the wireless communication device 100 may proceed to operation S855 to thereby reset the frequency band of the downlink signal. Then, the wireless communication device 100 proceeds to operation S710, and re-perform the reception of the downlink signal.

When it is determined that the accumulated count value does not exceed the accumulated maximum (or highest) value, the wireless communication device 100 may by proceed to operation S860 to thereby determine whether the second quality metric exceeds the fourth threshold value. The operation S860 may be performed in the same manner as, or a similar manner to, operation S650 of FIG. 6B.

When it is determined that the second quality metric exceeds the fourth threshold value, the wireless communication device 100 may proceed to operation S865, to thereby set the fourth reference number of times based on the second additional accumulation reference table. In addition, in operation S870, the wireless communication device 100 may update the second accumulated signal by additionally accumulating the downlink signal by the fourth reference number of times. The operations S865 and S870 may be performed in the same manner as, or a similar manner to, operations S660 and S670 of FIG. 6B, respectfully.

In addition, in operation S875, the wireless communication device 100 may increase the accumulated count value by the fourth reference number of times. The wireless communication device 100 may increase the accumulated count value by the fourth reference number of times, which is the number of times obtained by accumulating the downlink signals in operation S870 through the communication processor 130.

Conversely, when it is determined that the second quality metric does not exceed the fourth threshold value, the wireless communication device 100 may proceed to operation S880, to thereby update the second accumulated signal by additionally accumulating the downlink signal by the second reference number of times. The operation S880 may be performed in the same manner as, or a similar manner to, operation S680 of FIG. 6B.

In addition, in operation S885, the wireless communication device 100 may increase the accumulated count value by the second reference number of times. The wireless communication device 100 may increase the accumulated count value by the second reference number of times, which is the number of times obtained by accumulating the downlink signals in operation S880 through the communication processor 130.

When the second accumulated signal is updated and accumulated count value is increased through the operations shown in FIG. 8B, the wireless communication device 100 may proceed to operation S755 of FIG. 7 to re-calculate the second quality metric, and then may re-determine whether the second quality metric exceeds the third threshold value in operation S760.

In this way, when using the operation method of the wireless communication device 100 according to embodiments, it is possible to prevent taking a longer time (and/or reduce a duration of time used) to search for cells by using the accumulated count value.

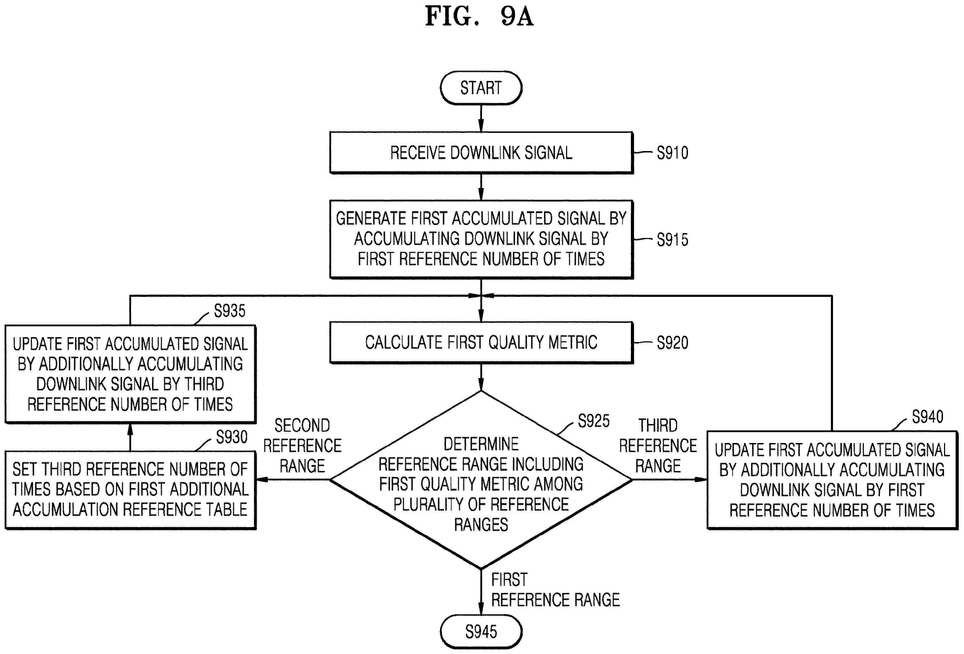

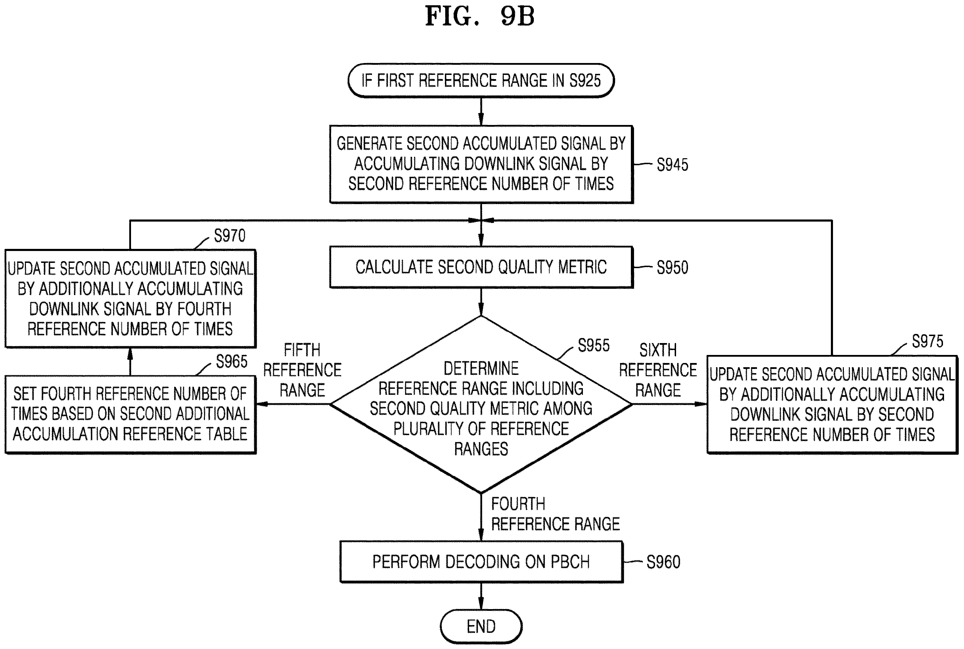

FIGS. 9A and 9B are flowcharts illustrating another example of an operation method of a wireless communication device according to embodiments.

Referring to FIGS. 9A and 9B, in operation S910, the wireless communication device 100 may receive a downlink signal. The operation S910 may be performed in the same manner as, or a similar manner to, operation S510 of FIG. 5.

In operation S915, the wireless communication device 100 may generate a first accumulated signal by accumulating the downlink signal by a first reference number of times. The operation S915 may be performed in the same manner as, or a similar manner to, operation S520 of FIG. 5.

In operation S920, the wireless communication device 100 may calculate the first quality metric. The operation S920 may be performed in the same manner as, or a similar manner to, in operation S530 of FIG. 5.

In operation S925, the wireless communication device 100 may determine a reference range including the first quality metric from among a plurality of reference ranges. That is, the wireless communication device 100 may determine in which reference range the first quality metric is included (e.g., falls within) among the plurality of reference ranges through the communication processor 130. In this case, the wireless communication device 100 may determine which reference range the first quality metric is included in among the plurality of reference ranges by comparing the first quality metric with the first threshold value and the second threshold value through the communication processor 130.

When the first quality metric exceeds the first threshold value, the wireless communication device 100 may determine that the first quality metric is included in the first reference range. When the first quality metric exceeds a second threshold value that is less than the first threshold value without exceeding the first threshold value, the wireless communication device 100 may determine that the first quality metric is included in the second reference range. When the first quality metric does not exceed the second threshold value, the wireless communication device 100 may determine that the first quality metric is included in the third reference range.

Based on the determination result, the wireless communication device 100 may proceed to one of operations S930, S940, and/or S945 to thereby update the first accumulated signal and/or generate the second accumulated signal.

When it is determined that the first quality metric is included in the second reference range, the wireless communication device 100 proceeds to operation S930 and sets the third reference number of times based on the first additional accumulation reference table. In addition, in operation S935, the wireless communication device 100 may update the first accumulated signal by additionally accumulating the downlink signal by the third reference number of times. The operations S930 and S935 may be performed in the same manner as, or a similar manner to, operations S620 and S630 of FIG. 6A, respectfully.

When it is determined that the first quality metric is included in the third reference range, the wireless communication device 100 may proceed to operation S940 to thereby update the first accumulated signal by additionally accumulating the downlink signal by the first reference number of times. The operation S940 may be performed in the same manner as, or a similar manner to, operation S640 of FIG. 6A.

When the first accumulated signal is updated through operation S935 or S940, the wireless communication device 100 may proceed to operation S920 of FIG. 9A to thereby recalculate the first quality metric and then may re-determine the reference range including the first quality metric among the plurality of reference ranges in operation S925.

When it is determined that the first quality metric is included in the first reference range, the wireless communication device 100 may proceed to operation S945 to thereby generate the second accumulated signal by accumulating the downlink signal by the second reference number of times. The operation S945 may be performed in the same manner as, or a similar manner to, operation S560 of FIG. 5.

In operation S950, the wireless communication device 100 may calculate the second quality metric. The operation S950 may be performed in the same manner as, or a similar manner to, operation S570 of FIG. 5.

In operation S955, the wireless communication device 100 may determine a reference range including the second quality metric from among a plurality of reference ranges. That is, the wireless communication device 100 may determine in which reference range the second quality metric is included (e.g., falls within) among the plurality of reference ranges through the communication processor 130. In this case, the wireless communication device 100 may determine which reference range the second quality metric is included in among the plurality of reference ranges by comparing the second quality metric with the third threshold value and the fourth threshold value through the communication processor 130.

When the second quality metric exceeds the third threshold value, the wireless communication device 100 may determine that the second quality metric is included in the fourth reference range. When the second quality metric exceeds the fourth threshold value that is less than the third threshold value without exceeding the third threshold value, the wireless communication device 100 may determine that the second quality metric is included in the fifth reference range. When the second quality metric does not exceed the fourth threshold value, the wireless communication device 100 may determine that the second quality metric is included in the sixth reference range.

When it is determined that the second quality metric is included in the fourth reference range, the wireless communication device 100 may proceed to operation S960 to thereby perform decoding on the PBCH. The operation S960 may be performed in the same manner as, or a similar manner to, operation S600 of FIG. 5.

When it is determined that the second quality metric is included in the fifth reference range, the wireless communication device 100 proceeds to operation S965 and sets the fourth reference number of times based on the second additional accumulation reference table. In addition, in operation S970, the wireless communication device 100 may update the second accumulated signal by additionally accumulating the downlink signal by the fourth reference number of times. The operations S965 and S970 may be performed in the same manner as, or a similar manner to, operations S660 and S670 of FIG. 6B, respectfully.

When it is determined that the second quality metric is included in the sixth reference range, the wireless communication device 100 may proceed to operation S975 to thereby update the second accumulated signal by additionally accumulating the downlink signal by the second reference number of times. The operation S975 may be performed in the same manner as, or a similar manner to, operation S680 of FIG. 6B.

When the second accumulated signal is updated through operation S970 or S975, the wireless communication device 100 may proceed to operation S950 of FIG. 9B to re-calculate the second quality metric and then may re-determine the reference range including the second quality metric among the plurality of reference ranges in operation S955.

In this case, when the wireless communication device 100 uses the accumulated count value, and it is determined that the first quality metric is included in the second or third reference range, and the accumulated count value exceeds the accumulated maximum (or highest) value, the wireless communication device 100 may reset the frequency band of the downlink signal received from the external device. In addition, the wireless communication device 100 may reset the frequency band of the downlink signal received from the external device when the second quality metric is determined to be included in the fifth or sixth reference range, and the accumulated count value exceeds the accumulation maximum (or highest) value. In addition, after operation S915, an operation as in operation S720 of FIG. 7 may be additionally performed, after operation S935, an operation as in operation S835 of FIG. 8A may be additionally performed, and after operation S940, an operation as in operation S845 of FIG. 8A may be additionally performed. In addition, an operation as shown in operation S740 of FIG. 7 may be additionally performed before operation S945, an operation as shown in operation S750 of FIG. 7 may be additionally performed after operation S945, an operation as shown in operation S875 of FIG. 8B may be additionally performed after operation S970, and an operation as shown in operation S885 of FIG. 8B may be additionally performed after operation S975.

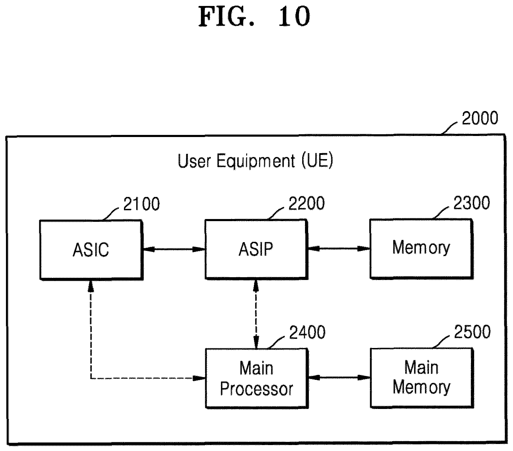

FIG. 10 is a block diagram illustrating a wireless communication device according to embodiments.

Referring to FIG. 10, user equipment 2000 may include an application specific integrated circuit (ASIC) 2100, an application specific instruction set processor (ASIP) 2200, a memory 2300, a main processor 2400, and/or a main memory 2500. Two or more of the ASIC 2100, the ASIP 2200, and/or the main processor 2400 may communicate with each other. In addition, at least two of the ASIC 2100, the ASIP 2200, the memory 2300, the main processor 2400, and/or the main memory 2500 may be embedded in one chip.

The ASIC 2100 is a customized integrated circuit for a particular use, and may include, for example, an RFIC, a modulator, a demodulator, and the like. The ASIP 2200 may support a dedicated instruction set for a particular application and execute instructions contained in the instruction set. The memory 2300 may communicate with the ASIP 2200 and may store a plurality of instructions executed by the ASIP 2200 as a non-transitory storage device. For example, the memory 2300 may include any type of memory accessible by the ASIP 2200, such as, for example, a random access memory (RAM), a read only memory (ROM), a tape, a magnetic disk, an optical disk, a volatile memory, a non-volatile memory, and/or a combination thereof.

The main processor 2400 may control the user equipment 2000 by executing a plurality of instructions. For example, the main processor 2400 may control the ASIC 2100 and/or the ASIP 2200, process data received through a wireless communication network, or process a user's input to the user equipment 2000. The main memory 2500 may communicate with the main processor 2400 and store a plurality of instructions executed by the main processor 2400 as a non-transitory storage device. For example, the main memory 2500 may include any type of memory accessible by the main processor 2400, such as, for example, a random access memory (RAM), a read only memory (ROM), a tape, a magnetic disk, an optical disk, a volatile memory, a non-volatile memory, and/or a combination thereof.

The components of the wireless communication device 100 or the operation of configuring the operation method of the wireless communication device 100 according to embodiments described above may be included in at least one of the components included in the user equipment 2000 of FIG. 10. For example, the wireless communication device 100 of FIG. 2 and at least one of the operations of the operation method of the wireless communication device 100 may be implemented as a plurality of instructions stored in the memory 2300, and the ASIP 2200 may execute the plurality of instructions stored in the memory 2300 to operate the wireless communication device 100 or perform at least one operation. As another example, the wireless communication device 100 of FIG. 2 or at least one of the operations of the operation method of the wireless communication device 100 described above may be implemented as a hardware block and included in the ASIC 2100. As another example, the wireless communication device 100 of FIG. 2 or at least one of the operations of the operation method of the wireless communication device 100 described above may be implemented as a plurality of instructions stored in the main memory 2500, and the main processor 2400 may operate the wireless communication device 100 or execute at least one operation of the operation method of the wireless communication device 100 described above by executing the plurality of instructions stored in the main memory 2500.

Conventional devices and methods for performing wireless communication experience difficulty in performing cell searches in lower signal to noise ratio (SNR) environments. Such lower SNR environments may correspond to circumstances in which the conventional devices are unable to receive (and/or experience difficulty in receiving) a downlink signal, due to excessive noise (e.g., resulting from interference radio waves, Additive Gaussian Noise (AWGN), etc.) and/or a lower magnitude of the downlink signal (e.g., resulting from obstacles in a communication path, a communication path of longer length, etc.). Based on this difficulty in receiving the downlink signal, the conventional devices and methods may be unable to accurately perform a cell search and/or may consume excessive resources in performing a cell search (e.g., power, processor, memory, delay, etc.).

However, according to embodiments, improved devices and methods are provided for performing wireless communication. For example, the improved devices and methods may accumulate synchronization signals in a downlink signal to mitigate the difficulties of lower SNR environments, enabling the improved devices and methods to accurately perform a cell search in such lower SNR environments. Also, the improved devices and methods involve determining a quality metric of the accumulated synchronization signals, and determining a number of times to perform the accumulation of the synchronization signals based on the quality metric. Accordingly, the improved devices and methods may consume fewer resources (e.g., power, processor, memory, delay, etc.) when performing the cell search. Therefore, the improved devices and methods overcome the deficiencies of the conventional devices and methods to at least improve the accuracy of a cell search and/or reduce resource consumption.

According to embodiments, operations described herein as being performed by the communication system 10, the wireless communication device 100, the base station 200, the satellite 300, the wireless communication device 100, the RFIC 120, the communication processor 130, the user equipment 2000, the ASIC 2100, the ASIP 2200 and/or the main processor 2400 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 2300 and/or the main memory 2500). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Although terms of "first" or "second" may be used to explain various components, the components are not limited to the terms. These terms should be used only to distinguish one component from another component. For example, a "first" component may be referred to as a "second" component, or similarly, and the "second" component may be referred to as the "first" component. Expressions such as "at least one of' when preceding a list of elements, modify the entire list of elements and do not modify the individual elements of the list. For example, the expression, "at least one of a, b, and c," should be understood as including only a, only b, only c, both a and b, both a and c, both b and c, all of a, b, and c, or any variations of the aforementioned examples. As used herein the term "and/or" includes any and all combinations of one or more of the associated listed items.

Embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail herein. Although discussed in a particular manner, a function or operation specified in a specific block may be performed differently from the flow specified in a flowchart, flow diagram, etc. For example, functions or operations illustrated as being performed serially in two consecutive blocks may actually be performed concurrently, simultaneously, contemporaneously, or in some cases be performed in reverse order.

While the inventive concepts have been particularly shown and described with reference to embodiments thereof, it will be understood that various changes in form and details may be made therein without departing from the scope of the following claims.

## Claims

1. A method of operating a wireless communication device for performing a cell search, the method comprising:
generating a first accumulated signal by accumulating a downlink signal by a first reference number of times, the generating of the first accumulated signal being based on an interval of a first synchronization signal included in the downlink signal;
calculating a first quality metric based on the first accumulated signal;
determining whether the first quality metric exceeds a first threshold value; and
updating the first accumulated signal in response to determining the first quality metric does not exceed the first threshold value to obtain an updated first accumulated signal.

2. The method of claim 1, wherein the updating of the first accumulated signal comprises:
determining whether the first quality metric exceeds a second threshold value, the second threshold value being less than the first threshold value; and
updating the first accumulated signal by:
first additionally accumulating the downlink signal by the first reference number of times in response to determining the first quality metric does not exceed the second threshold value, the first additionally accumulating being based on the interval of the first synchronization signal, or
second additionally accumulating the downlink signal by a third reference number of times in response to determining the first quality metric exceeds the second threshold value, the second additionally accumulating including setting the third reference number of times based on a first additional accumulation reference table, and the second additionally accumulating being based on the interval of the first synchronization signal.

3. The method of claim 1 or 2, further comprising:
generating a second accumulated signal by accumulating the downlink signal by a second reference number of times, the generating of the second accumulated signal being based on an interval of a second synchronization signal included in the downlink signal, and the generating the second accumulated signal being performed in response to determining that the updated first accumulated signal exceeds the first threshold value;
calculating a second quality metric based on the second accumulated signal;
determining whether the second quality metric exceeds a third threshold value; and
performing at least one of
updating the second accumulated signal in response to determining the second quality metric does not exceed the third threshold value to obtain an updated second accumulated signal, or
performing decoding on a physical broadcast channel (PBCH) included in the downlink signal in response to determining the second quality metric exceeds the third threshold value.

4. The method of claim 3, wherein the updating of the second accumulated signal comprises:
determining whether the second quality metric exceeds a fourth threshold value that is less than the third threshold value; and
updating the second accumulated signal by:
third additionally accumulating the downlink signal by a second reference number of times in response to determining the second quality metric does not exceed the fourth threshold value, and the third additionally accumulating being based on the interval of the second synchronization signal; or
fourth additionally accumulating the downlink signal by a fourth reference number of times in response to determining the second quality metric exceeds the fourth threshold value, fourth additionally accumulating including setting the fourth reference number of times based on a second additional accumulation reference table, and the fourth additionally accumulating being based on the interval of the second synchronization signal.

5. The method of claim 3 or 4, wherein
the first quality metric includes any one of:
a peak value of a first correlation between the downlink signal and a first synchronization signal sequence,
a reference signal received power (RSRP) calculated based on the peak value of the first correlation, or
a signal to noise ratio (SNR) calculated based on the peak value of the first correlation; and
the second quality metric includes any one of:
a peak value of a second correlation between the downlink signal and a second synchronization signal sequence,
an RSRP calculated based on the peak value of the second correlation, or
an SNR calculated based on the peak value of the second correlation.

6. The method of any one of claims 3, 4, or 5, further comprising:
increasing an accumulated count value by the first reference number of times after the generating of the first accumulated signal,
wherein the updating of the first accumulated signal comprises updating the first accumulated signal based on
a second threshold value that is less than the first threshold value, and
the accumulated count value.

7. The method of claim 6, wherein the updating of the first accumulated signal comprises: performing at least one of:
resetting a frequency band of the downlink signal to another frequency band in response to determining the accumulated count value exceeds an accumulation maximum value, and repeating the generating of the first accumulated signal based on the other frequency band,
first updating the first accumulated signal by additionally accumulating the downlink signal by the first reference number of times in response to determining the accumulated count value does not exceed the accumulated maximum value and the first quality metric does not exceed the second threshold value, the first updating of the first accumulation signal being based on the interval of the first synchronization signal, or
second updating the first accumulated signal by additionally accumulating the downlink signal by a third reference number of times in response to determining the accumulated count value does not exceed the accumulation maximum value and the first quality metric exceeds the second threshold value, the second updating of the first accumulated signal including setting the third reference number of times based on a first additional accumulation reference table, and the second updating of the first accumulation signal being based on the interval of the first synchronization signal.

8. The method of claim 6 or 7, further comprising:
initializing the accumulated count value before the generating of the second accumulated signal; and
increasing the accumulated count value by the second reference number of times after the generating of the second accumulated signal,
wherein the updating of the second accumulated signal comprises updating the second accumulated signal based on a fourth threshold value and the accumulated count value, the fourth threshold value being less than the third threshold value.

9. The method of claim 8, wherein the updating of the second accumulated signal comprises: performing at least one of:
resetting a frequency band of the downlink signal to another frequency band in response to determining the accumulated count value exceeds an accumulation maximum value, and repeating the generating of the second accumulated signal based on the other frequency band,
first updating the second accumulated signal by additionally accumulating the downlink signal by the second reference number of times in response to determining the accumulated count value does not exceed the accumulated maximum value and the second quality metric does not exceed the fourth threshold value, the first updating of the second accumulation signal being based on the interval of the second synchronization signal, or
second updating the second accumulated signal by additionally accumulating the downlink signal by a fourth reference number of times in response to determining the accumulated count value does not exceed the accumulated maximum value and the second quality metric exceeds the fourth threshold value, the second updating of the second accumulated signal including setting the fourth reference number of times based on a second additional accumulation reference table, and the second updating of the second accumulation signal being based on the interval of the second synchronization signal.

10. The method of any one of claims 3 to 9, further comprising:
calculating an updated first quality metric based on the updated first accumulated signal;
determining whether the updated first quality metric exceeds the first threshold value;
calculating an updated second quality metric based on the updated second accumulated signal; and
determining whether the updated second quality metric exceeds the third threshold value.

11. A method of operating a wireless communication device for performing a cell search, the method comprising:
generating a first accumulated signal by accumulating a downlink signal by a first reference number of times, the generating of the first accumulated signal being based on an interval of a first synchronization signal included in the downlink signal;
calculating a first quality metric based on the first accumulated signal;
determining a reference range among a plurality of reference ranges in which the first quality metric is included to obtain a first determined reference range; and
performing one of
updating the first accumulated signal based on the first determined reference range, or
generating a second accumulated signal based on the first determined reference range, the generating of the second accumulated signal being performed by accumulating the downlink signal by a second reference number of times, and the generating of the second accumulated signal being based on an interval of a second synchronization signal included in the downlink signal.

12. The method of claim 11, wherein
the plurality of reference ranges includes a first reference range, a second reference range and a third reference range; and
the determining the reference range among the plurality of reference ranges into which the first quality metric is included comprises:
determining the first determined reference range to be first reference range when the first quality metric exceeds a first threshold value,
determining the first determined reference range to be the second reference range when the first quality metric exceeds a second threshold value without exceeding the first threshold value, the second threshold value being less than the first threshold value, and
determining the first determined reference range to be the third reference range when the first quality metric does not exceed the second threshold value.

13. The method of claim 12, further comprising:
generating the second accumulated signal by accumulating the downlink signal based on the first determined reference range is the first reference range;
first updating the first accumulated signal by additionally accumulating the downlink signal by a third reference number of times based on the first determined reference range is the second reference range, the first updating of the first accumulated signal including setting the third reference number of times based on a first accumulation reference table, and the first updating being based on the interval of the first synchronization signal; or
second updating the first accumulated signal by additionally accumulating the downlink signal by the first reference number of times based on the first determined reference range is the third reference range, the second updating of the first accumulated signal being based on the interval of the first synchronization signal.

14. The method of claim 13, further comprising:
generating the second accumulated signal by accumulating the downlink signal based on the determined reference range being the first reference range;
calculating a second quality metric based on the second accumulated signal;
determining a reference range among the plurality of reference ranges into which the second quality metric is included to obtain a second determined reference range; and
performing one of
updating the second accumulated signal based on the second determined reference range, or
performing decoding on a physical broadcast channel (PBCH) included in the downlink signal based on the second determined reference range.

15. The method of claim 14, wherein
the plurality of reference ranges includes a fourth reference range, a fifth reference range and a sixth reference range; and
the determining the reference range among the plurality of reference ranges into which the second quality metric is included comprises:
determining the second determined reference range to be the fourth reference range when the second quality metric exceeds a third threshold value,
determining the second determined reference range to be the fifth reference range when the second quality metric exceeds a fourth threshold value without exceeding the third threshold value, the fourth threshold value being less than the third threshold value, and
determining the second determined reference rang to be the sixth reference range when the second quality metric does not exceed the fourth threshold value.
